**Europäisches Patentamt**

**European Patent Office**

**Office européen des brevets**

(19)

(11) Numéro de publication : **0 668 698 A1**

(12)

# DEMANDE DE BREVET EUROPEEN

(21) Numéro de dépôt : **95400315.8**

(22) Date de dépôt : **15.02.95**

(51) Int. Cl.⁶ : **H04N 7/08**

(30) Priorité : **17.02.94 FR 9401814**

(43) Date de publication de la demande :
**23.08.95 Bulletin 95/34**

(84) Etats contractants désignés :
**DE ES GB IT**

(71) Demandeur : **TELEDIFFUSION DE FRANCE**
**10, rue d'Oradour sur Glane**
**F-75015 Paris (FR)**

(72) Inventeur : **Gautier, Christian**
**Le Boulais**
**F-35690 Acigne (FR)**
Inventeur : **Auge, Jean**
**30 rue J.P. Timbaud**
**F-92320 Chatillon (FR)**

(74) Mandataire : **Lepercque, Jean et al**
**Cabinet Claude Rodhain SA**
**3, rue Moncey**
**F-75009 Paris (FR)**

(54) **Procédé et système de programmation d'enregistrement et terminal de programmation.**

(57)    L'invention concerne un système de programmation d'enregistrements effectués par un enregistreur caractérisé en ce qu'il comporte :
— un serveur diffusant d'une part une base de données prévisionnelle comportant au moins des informations prévisionnelles de début d'éléments de programme d'au moins un dit canal d'émission ainsi que des informations d'identification desdits éléments de programme et d'autre part un service en temps réel comportant au moins des signaux de début effectif desdits éléments de programme, ledit serveur n'étant pas émis par un canal d'émission
— un terminal (20) comportant un récepteur (PAG) recevant les informations du serveur, un dispositif de mémorisation (MEM), une interface de selection (CL2) permettant à un utilisateur de sélectionner l'enregistrement d'au moins un dit élément de programme et un circuit (EIR) de déclenchement de l'enregistreur (ENR) détectant le signal de début effectif dudit élément de programme sélectionné et déclenchant l'enregistreur (ENR).

FIG_4

La présente invention a pour objet un procédé et un système de programmation d'enregistrements effectués par un enregistreur, en particulier un magnétoscope pour enregistrer au moins un canal d'émission.

Un service de vidéomessagerie et enregistrement automatique (système EPEOS) est décrit dans la publication du CCETT publiée le 29 mai 1978 sous la référence TSA/T/10/78. Le système EPEOS permet à tout téléspectateur d'enregistrer automatiquement à l'aide d'un clavier spécial, les programmes qu'il désire grâce à un code, sorte d'étiquette décrivant le contour et l'origine de chaque élément de programme, transmis en même temps que le signal de télévision. Pour indiquer son choix, l'utilisateur emploie des numéros d'émissions dont il peut avoir connaissance par la presse ou d'autres moyens audiovisuels, et disposer d'un clavier sur lequel il introduit celui ou ceux qu'il désire.

Tout possesseur d'un magnétoscope télécommandable auquel est adjoint un programmateur, accède à ce service.

Un service de télétexte ANTIOPE permet à l'utilisateur de connaître les programmes en détail et de connaître les codes d'identification qu'il lui faut introduire dans son clavier.

Un service télétexte met en oeuvre une transmission qui consiste essentiellement à mettre à profit l'intervalle de suppression de ligne d'un signal de télévision. Ce service est lié à un canal de télévision, d'où une capacité limitée, notamment en raison du fait que la ressource télétexte est également affectée à d'autres services.

Un système de programmation d'un magnétoscope est connu de la demande de brevet européen EP-A-300 562 (PHILIPS).

Celui-ci met en oeuvre des pages de télétexte correspondant au standard décrit dans le document "BROADCAST TELETEXT SPECIFICATION" de septembre 1976 et publié conjointement par la BRISTISH BRODCASTING CORP., l'INDEPENDANT BROADCASTING AUTHORITY et la BRITISH RADIO EQUIPMENT MANUFACTURER'S ASSOCIATION.

On rappellera que la transmission de type télétexte consiste essentiellement à mettre à profit l'intervalle de suppression de ligne d'un signal de télévision.

Selon cette antériorité, un catalogue de programmes est établi sur des pages télétexte. Un curseur permet de sélectionner un programme à enregistrer, lequel est pourvu d'un code de programmation.

Lorsqu'ultérieurement, un code de programmation en temps réel qui est transmis correspond à une information de programmation qui a été mémorisée, le magnétoscope est déclenché. Ce système présente, comme le précédent, l'inconvénient que l'information concernant les programmes de télévision est transmise par un service télétexte lié à un canal de télévision d'où une capacité limitée.

Il en résulte qu'en pratique, le service fourni ne peut concerner qu'un nombre limité de chaînes de télévision alors que la tendance actuelle est d'augmenter le nombre de chaînes.

Un autre inconvénient est que chaque canal de télévision est obligé de diffuser le service, ce qui implique une redondance importante qui est particulièrement préjudiciable pour une ressource télétexte qui est limitée.

Il est également connu de la demande PCT publiée le 12.07.90 sous le N°WO 90/07844 (YUEN), un procédé de programmation commercialisé sous la marque SHOWVIEW et qui utilise un code comprimé contenant les informations sur le canal, la date et l'heure des programmes. Ces codes sont publiés dans des magazines et sont introduits manuellement dans un dispositif de commande par un utilisateur pour permettre l'enregistrement des programmes sélectionnés.

Ce dernier procédé, essentiellement manuel, ne se prête pas à une réactualisation des programmes.

La présente invention a pour objet un procédé et un système qui ne présente pas les inconvénients précités.

Le système selon l'invention est dans ce but caractérisé en ce qu'il comporte :

- un serveur diffusant d'une part une base de données prévisionnelle comportant au moins des informations prévisionnelles de début d'éléments de programme faisant partie d'une grille de programmes d'au moins un dit canal d'émission ainsi que des informations d'identification desdits éléments de programme et d'autre part un service en temps réel comportant au moins des signaux de début effectif desdits éléments de programme, ledit serveur n'étant pas émis par un dit canal d'émission

- un terminal comportant un récepteur recevant les informations de la base de donnée prévisionnelle et du service en temps réel, un dispositif de mémorisation mémorisant les informations de la base de donnée prévisionnelle, une interface de sélection permettant à un utilisateur de sélectionner l'enregistrement d'au moins un dit élément de programme de son choix et un circuit de déclenchement de l'enregistreur détectant le signal de début effectif dudit élément de programme sélectionné et déclenchant en conséquence un début d'enregistrement pour l'enregistreur dudit élément de programme sélectionné.

Le système selon l'invention peut être avantageusement caractérisé en ce que ladite base de données prévisionnelle comporte également des informations prévisionnelles de fin desdits éléments de programme et en ce que ledit service comporte également des signaux de fin effective desdits éléments de programme.

Ledit service peut également comporter des signaux d'interruption et de reprise affectés auxdits éléments de programme et le circuit de déclenchement de l'enregistreur comporte un moyen d'interruption et de reprise de l'enregistrement du programme sélectionné actionné par lesdits signaux d'interruption et de reprise affectés audit programme sélectionné.

Le système peut être caractérisé en ce que le terminal est un boîtier de télécommande de l'enregistreur et en ce que le circuit de déclenchement de l'enregistreur comporte un émetteur infra-rouge de télécommande.

Selon un mode de réalisation préféré, le système est caractérisé en ce qu'il comporte un émetteur RDS effectuant la diffusion dudit serveur, en ce que le terminal est un boîtier de télécommande de l'enregistreur et comporte un récepteur RDS et en ce que le circuit de déclenchement de l'enregistreur comporte un émetteur infra-rouge de télécommande.

Ceci permet d'intégrer au boîtier de télécommande un récepteur miniature (ou "pager") qui reçoit les informations fournies par le serveur de manière entièrement autonome par rapport à l'enregistreur, par exemple un magnétoscope, à programmer.

Le système est avantageusement caractérisé en ce que la base de donnée dudit serveur comporte au moins une grille de programme hebdomadaire affectée à la semaine S en cours, et peut être plus particulièrement caractérisé en ce que la base de donnée dudit serveur comporte également une grille de programme hebdomadaire affectée à la semaine (S + 1) suivant la semaine en cours.

Il est particulièrement avantageux que chacun desdits signaux de début effectif desdits éléments de programme comporte un bloc comprenant un identifiant de l'élément de programme et un signal logique de début d'enregistrement et/ou que chacun desdits signaux de fin effective desdits éléments de programme comporte un bloc comprenant un identifiant de l'élément de programme et un signal logique de fin d'enregistrement. et/ou que chacun desdits signaux d'interruption comporte un bloc comprenant un identifiant de l'élément de programme objet de l'interruption et un signal logique d'interruption.

Le système peut être caractérisé en ce que le serveur comporte un moyen de cryptage des signaux de début effectif contenus dans le service en temps réel et en ce que le terminal comporte un moyen de décryptage desdits signaux de début effectif.

L'invention concerne également un procédé de programmation d'enregistrements effectués par un enregistreur caractérisé en ce qu'il comporte les étapes suivantes :

- émettre un serveur diffusant d'une part une base de données prévisionnelle comportant au moins des informations prévisionnelles de début d'élément de programme faisant partie d'une grille de programmes d'au moins un canal d'émission ainsi que des informations d'identification desdits éléments de programme et d'autre par un service en temps réel comportant au moins des signaux de début effectif desdits éléments de programme, ledit serveur n'étant pas émis par un dit canal d'émission

- recevoir à l'aide d'un récepteur les informations de la base de données prévisionnelle et du service en temps réel
- mémoriser les informations de la base de données prévisionnelles
- sélectionner l'enregistrement d'au moins un dit élément de programme
- détecter le signal de début effectif dudit élément de programme sélectionné
- à réception dudit signal de début effectif déclencher le début d'enregistrement par l'enregistreur dudit élément de programme sélectionné.

Selon un mode de réalisation préféré, le procédé est caractérisé en ce que l'émission de la base de données prévisionnelle et du service en temps réel sont effectués selon la norme RDS.

Le procédé peut également comporter à l'émission une étape de cryptage des signaux de début effectif contenus dans le service en temps réel, et à la réception, une étape de décryptage au moins dudit signal de début effectif.

L'invention concerne également un terminal de programmation d'enregistrements effectués par un enregistreur pour enregistrer au moins une émission d'au moins un dit canal d'émission, caractérisé en ce qu'il comporte :

- un récepteur accordé en dehors d'un dit canal d'émission et recevant d'une part les informations d'une base de données prévisionnelle comportant au moins des informations prévisionnelles de début d'éléments de programme faisant partie d'une grille de programmes d'au moins un canal d'émission ainsi que des informations d'identification desdits éléments de programme, et d'autre part un service en temps réel comportant au moins des signaux de début effectif desdits éléments de programme
- un dispositif de mémorisation mémorisant les informations de la base de données prévisionnelle
- une interface de sélection permettant à un utilisateur de sélectionner l'enregistrement d'au moins un dit élément de programme
- un circuit de déclenchement détectant le signal de début effectif dudit élément de programme sélectionné et produisant en conséquence un signal de départ d'enregistrement dudit élément de programme sélectionné.

Le récepteur est de préférence un récepteur RDS, en particulier un récepteur miniature ("pager"). Le terminal est avantageusement caractérisé en ce qu'il est un boîtier de télécommande de l'enregistreur et en ce que le circuit de déclenchement de l'enregistreur comporte un émetteur infra-rouge de télécommande produisant ledit signal de départ d'enregistrement.

Il peut comporter un écran de visualisation des informations d'identification des élément de programme et un pointeur de sélection des éléments de programme à enregistrer.

Le récepteur comporte avantageusement un moyen de décryptage des signaux de début effectif. Il peut alors comporter un moyen de contrôle de la validité d'un abonnement au service en temps réel et un moyen de validation du moyen de décryptage en fonction du résultat dudit contrôle de validité.

D'autres caractéristiques et avantages de l'invention apparaîtront mieux à la lecture de la description qui va suivre, donnée à titre d'exemple non limitatif en liaison avec les dessins qui représentent :

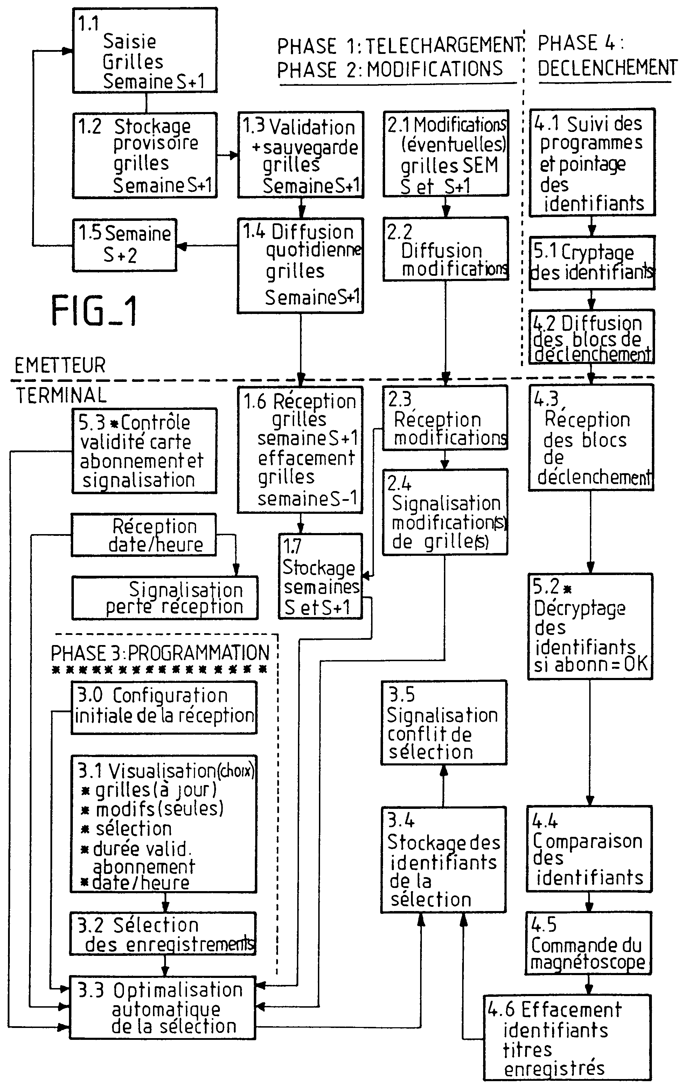

- 1 figure 1 un organigramme d'un système selon l'invention ;
- la figure 2 un schéma fonctionnel illustrant la saisie et la diffusion des grilles de programme par le serveur ;
- la figure 3 un schéma fonctionnel illustrant la saisie et la diffusion des identifiants des programmes en temps réel
- la figure 4 une architecture d'un boîtier de télécommande constituant un mode de réalisation préféré d'un terminal selon l'invention ; et
- les figures 5 à 7, une vue de dessus d'un boîtier de télécommande selon un mode préféré de réalisation de l'invention, selon trois modes d'affichage correspondant à une sélection de programme par un pointeur.

Le procédé selon l'invention met en oeuvre :
- un serveur diffusant par voie radio de préférence par RDS-FM (Radio Data System), ou bien encore par autre sous-porteuse FM, par diffusion de données AM en ondes longues, moyennes ou courtes, et de manière quotidienne (téléchargement), les grilles de programmes (simplifiées) des chaînes de télévision, et
- un terminal constitué, selon un mode de réalisation préféré par
    . un récepteur radio, par exemple pour la réception RDS,
    . une mémoire de stockage des grilles,
    . une interface permettant à l'utilisateur de programmer les enregistrements de son choix, un circuit d'optimisation automatique de cette programmation,
    . un circuit de déclenchement télésynchronisé par radio, notamment RDS, et comportant un émetteur infra-rouge connu en soi commandant le magnétoscope,
- le serveur diffusant également en permanence (RDS) les signaux de début, d'interruption, de reprise et de fin pour chaque élément de programme de chaque chaîne.

L'organigramme général du procédé est représenté à la figure 1. Les points 1.1 à 1.5, 2.1, 2.2, 4.1 et 4.2 concernent le serveur (émetteur), et les autres points le terminal (récepteur) et la programmation des enregistrements.

Les points 1.1 à 1.7 concernent le téléchargement des grilles de programme. Les points 2.1 à 2.4 concernent les modifications éventuelles des grilles de programme. Les points 3.0 à 3.5 concernent la sélection (programmation) des enregistrements. Les points 4.1 à 4.6 concernent le déclenchement de l'enregistreur.

Un téléchargement des grilles de programme dans la mémoire MEM de stockage du terminal s'effectue pour la semaine S+1 (la semaine S est celle en cours) (points 1.1 et 1.2 de l'organigramme de la figure 1).

On entendra par grille l'ensemble des éléments de programme prévus par semaine pour chaque chaîne.

Les informations saisies pour chaque élément de programme comportent un bloc :
/A/jour/chaîne/PRG/titre/heure début/durée/ITC/ITT

La partie soulignée est appelée l'identifiant de l'élément de programme.

L'information PRG, destinée au déclenchement, définit chaque élément de programme pour un jour donné sur une chaîne donnée.

Le titre est la désignation littérale très simplifiée de chaque élément de programme (Germinal, journal, Madame est servie).

Les informations ITC (indice de tri par chaîne) et ITT (indice de tri par titre) réservent la possibilité ultérieure de procéder au niveau du terminal à des tris par chaînes et par titres (ex thème, langue, etc).

L'information A (type de bloc) indique que le bloc fait partie d'une grille.

Le nombre de caractères alphanumériques affectés à chaque bloc de grille est par exemple le suivant :

```
type  = 1
jour  = 2
chaîne = 3
ITC   = 2
heure = 4
PRG   = 2
titre = 20
durée = 3
ITT   = 2
---------
Tot : 39
```

Le nombre maximal d'éléments de programme (de titres) par chaîne et par jour est égal à 50.

Le système RDS par exemple permet de diffuser tels quels, l'équivalent d'environ 45 blocs par minute.

Le séquence quotidienne de téléchargement de l'ensemble des grilles hebdomadaires peut donc être diffusée en environ 45 minutes pour 6 chaînes, en moins de 2 heures pour 15.

Un terminal donné ne télécharge qu'une seule fois les grilles de programme de la semaine S+1.

Après validation (1.3) diffusion des grilles de la semaine S+1 (1.4) aux heures creuses (nuit) par voie RDS (paging), et pour permettre une sélection des enregistrements de la part des téléspectateurs.

Ces grilles ne sont pas retouchées ; une diffusion séparée des modifications est effectuée si besoin est. Après diffusion de la grille de la semaine S+1, le serveur passe à la saisie de la grille de la semaine S+2 (1.5), et ainsi de suite.

L'étape suivante est la réception des grilles S+1 (1.6) qui sont stockées en remplacement de S-1 (l'effacement de S-1 s'effectue au changement de numéro de jour).

Les grilles de la semaine S sont conservées (1.7) et elles seront ultérieurement effacées à la réception de S+2.

Les modifications qui sont éventuellement diffusées sont repérées successivement par un type de bloc référencé de B à F soit 5 modifications successives possibles par jour et par chaîne par rapport au bloc initial A (2.1).

Chaque modification entraîne la diffusion de l'ensemble des blocs correspondant à la zone de temps (plusieurs éléments de programme) perturbée (2.2).

A réception des modifications (2.3) le terminal effectue le stockage des blocs correspondant à la zone de temps perturbée à l'emplacement des blocs de grille ou de modification précédente (1.7). Il est prévu une signalisation par voyant pour prévenir du fait qu'il y a modification(s) de grille(s) (2.4).

La programmation des enregistrements (3.0 à 3.5) s'effectue de la manière suivante.

L'utilisateur choisit de visualiser (3.1 position GRILLES) les grilles chaîne par chaîne. Une fois pour toutes, il indique au terminal quelles sont les chaînes captées par son installation.

En mode GRILLES de l'affichage, l'utilisateur peut visualiser à tout instant les éléments de programme, qu'il fait défiler chaîne par chaîne, jour par jour, titre par titre.

Au passage du nom de chaque titre dont il souhaite l'enregistrement, devant un index, l'utilisateur active la fonction ENREG qui mémorise son choix (3.2).

Un coefficient de priorité peut être affecté à un (et un seul) des titres (fonction PRIOR).

La fonction d'optimisation automatique (3.3) recherche les titres dans les grilles stockées, afin d'obtenir la compatibilité de tous les enregistrements (un même titre peut être disponible à des heures ou jours différents sur la même chaîne ou sur une chaîne différente), ce qui peut permettre un enregistrement différé en cas de conflit avec un élément de programme diffusé une seule fois.

Le système vérifie également qu'aucune demande ne correspond à une chaîne non reçue par l'installation, ou à une date ou heure déjà passée.

Le mode SELECT de l'affichage présente l'assemblage retenu de la sélection à enregistrer et indique la durée totale de cet assemblage.

Toute incompatibilité se traduit par l'allumage du voyant CONFLIT de sélection (3.5). Dans ce cas l'utilisateur revisualise sa sélection et corrige sa demande jusqu'à extinction du voyant CONFLIT.

Ce voyant se rallume automatiquement si une modification diffusée par la suite entraîne une nouvelle incompatibilité des choix.

Chaque réception de modification entraîne une réactivation de la fonction d'optimalisation automatique de la sélection. En cas de conflit sans correction de l'utilisateur, les enregistrements seront déclenchés sans garantie de non-recouvrement par un autre pour chacun d'eux, sauf pour celui éventuellement désigné comme prioritaire.

L'individualité d'un abonnement n'empêche ni la réception des grilles, ni la programmation, mais l'afficheur, en mode GRILLES et SELECT, prévient l'utilisateur que les enregistrements demandés ne seront pas déclenchés. A tout moment l'utilisateur peut être informé de son état d'abonnement par la fonction ABONN.

La mémoire de stockage de la sélection contient les identifiants (jour/chaîne/PRG) de chaque titre choisi (3.4). Le service peut aussi utiliser des codes d'identification diffusés avec les programmes, éventuellement mis en place par les chaînes.

Le suivi du déroulement des programmes (4.1) est assuré en permanence par des équipes tournantes qui diffusent au moins deux informations de déclenchement au moment du passage à l'antenne de chaque élément de programme (pointage).

La première information est constituée par un bloc comprenant l'identifiant de l'élément de programme, associé à un signal de début d'enregistrement (L).

Structure:/L/jour/chaîne/PRG/(7 caractères)

La dernière information est constituée par un bloc comprenant l'identifiant de l'élément de programme, associé à un signal de fin d'enregistrement (F).

Structure:/F//jour/chaîne/PRG/ (7 caractères)

Les informations supplémentaires éventuelles correspondant aux suspensions accidentelles de diffusion, sont constituées par un bloc (7 caractères) comprenant l'identifiant de l'élément de programme, associé à un signal d'interruption (U) ou de reprise (R).

Le serveur diffuse les blocs de déclenchement (4.2)

Le récepteur du terminal reçoit les blocs de déclenchement (4.3) avec le même processus de correction et de validation (répétition/confirmation) que pour la radiomessagerie téléchargée des grilles de programme.

Une opération de comparaison (4.4) est effectuée entre les identifiants diffusés dans les blocs de déclenchement et le ou les identifiant(s) de la sélection mémorisée.

Si un identifiant diffusé est identique à un identifiant de la sélection mémorisé, dans un bloc de déclenchement associé à un signal L de début, d'enregistrement (4.5), l'enregistreur est commandé pour commencer à enregistrer. Si le même identifiant apparaît ensuite dans un bloc ayant un signal d'interruption U ou de reprise R, l'enregistrement est respectivement interrompu, puis repris. Lorsque le même identifiant apparaît dans un bloc de déclenchement ayant un signal de fin d'enregistrement F, l'enregistrement est arrêté.

A la réception du signal de fin F, la mémoire de stockage MEM est vidée de l'identifiant correspondant (3.4).

Le terminal peut en outre présenter des fonctions dites de service.

L'heure et la date constituent une information systématiquement disponible par RDS.

La réception de cette information (qui peut être visualisée à la demande sur le terminal), sert également à contrôler en permanence la qualité du signal RDS reçu et l'aptitude du terminal à l'exploiter. Un voyant indique toute difficulté en ce domaine.

La nécessité de changement de piles du terminal est signalée par l'intermédiaire de l'afficheur. Une batterie tampon permet d'effectuer ce changement sans déprogrammation.

Comme indiqué en 1.1 + 1.2, les indices ITT (indice de tri par titre) et ITC (indice de tri par chaîne) peuvent être mis en oeuvre pour effectuer des sélections par critères (thème, langue, etc), de manière à faciliter la sélection des éléments de programme à enregistrer.

Le terminal peut présenter des fonctions de contrôle d'accès au service (5.1, 5.2, 5.3). Le décryptage des identifiants, cryptés pour le déclenchement et non pour le téléchargement des grilles, peut être autorisé par les données d'accès au service contenues dans une carte d'abonnement. On peut utiliser tout type de cryptage connu.

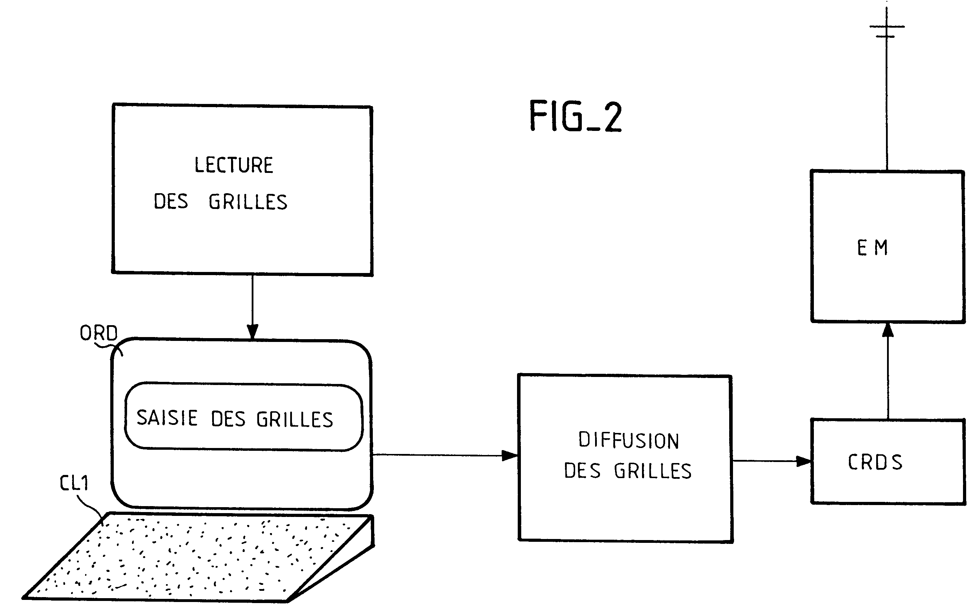

A cet effet, dans l'émetteur (tête de réseau), une opération 5.1 de cryptage des identifiants (c'est-à-dire au minimum des signaux de début effectif contenus dans le service en temps réel) est effectuée entre les étapes 4.1 et 4.2, de manière à crypter les blocs de déclenchement (figure 2).

Une étape 5.2 de décryptage des identifiants de déclenchement est introduite après l'étape 4.3 de réception des blocs de déclenchement et avant l'étape 4.4.

Le microprocesseur MP du terminal présente également une fonction 5.3 de contrôle de la validité ou de la non-validité de la carte d'abonnement CAB introduite dans un lecteur de carte LC, cette validité conditionnant par ailleurs l'activation de l'étape 5.2 de décryptage.

L'extension du procédé à d'autres usages pourra être obtenue par l'attribution de type de blocs ("X-"/jour/chaîne/PRG) correspondant à des identifiants qui pourront être cryptés selon un niveau de confidentialité spécifique.

Selon la figure 2, les grilles de programme fournies par les émetteurs, par exemple les chaînes de télévision, sont lues et rentrées en mémoire d'un ordinateur ORD par un clavier CL1. Ces grilles sont ensuite diffusées par un émetteur EM après codage par un codeur CRDS selon la norme RDS ("Radio Data System"). L'émetteur EM est un émetteur en modulation de fréquence FM qui est indépendant des émetteurs de télévision.

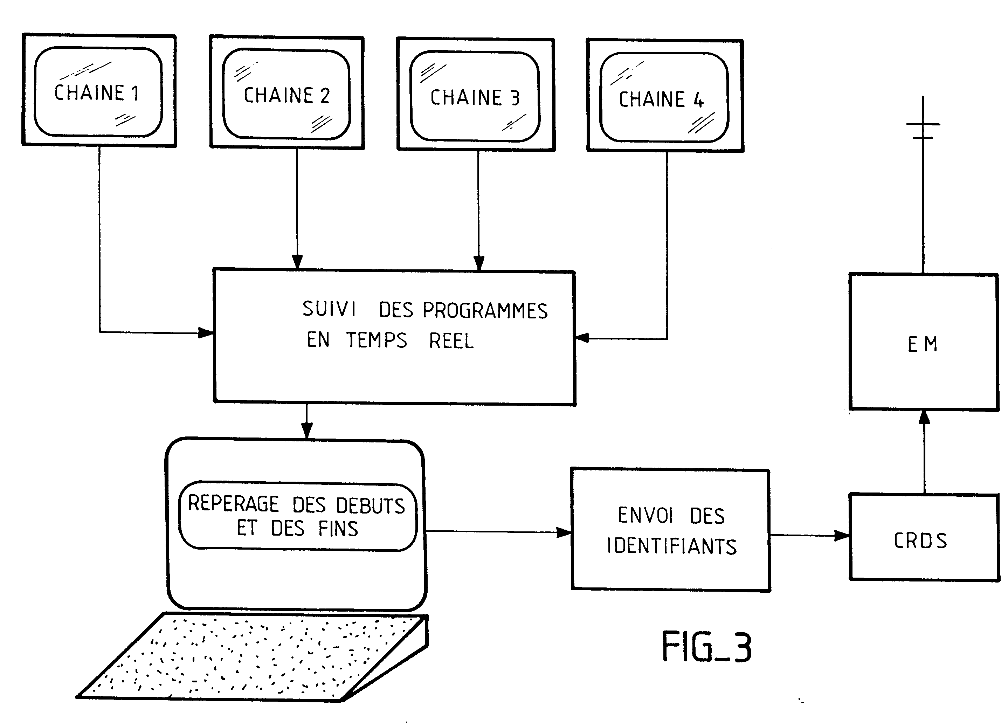

Selon la figure 3, un opérateur suit en temps réel les programmes d'une pluralité de chaînes de télévision chaîne 1, chaîne 2, chaîne 3, chaîne 4, etc... et repère les débuts et les fins d'émission ainsi que les interruptions et les reprises des programmes. Les identifiants correspondants de début L, de fin F, d'interruption U et de reprise R sont envoyés en temps réel par l'émetteur EM après codage par le codeur CRDS. On remarquera que le système RDS permettant un multiplexage des informations, l'envoi des identifiants en temps réel, qui ne mobilise que peu de ressource d'émission, peut aussi être envoyée en même temps que s'effectue une diffusion ou une mise à jour des grilles de programme.

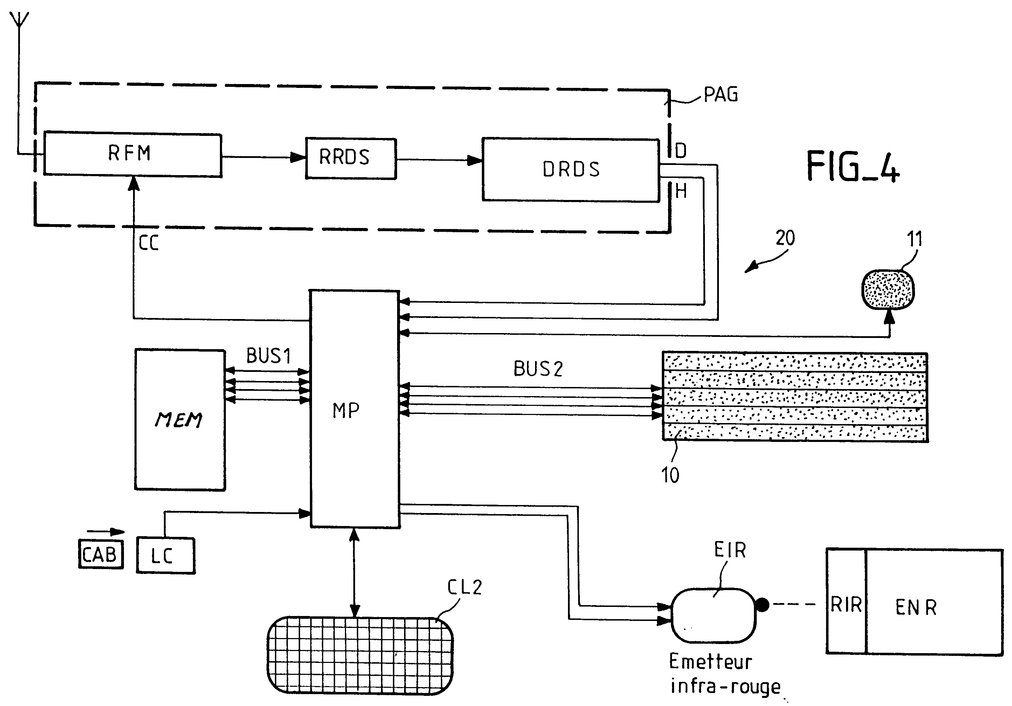

Selon la figure 4, un terminal 20, ici un boîtier de télécommande, comporte un récepteur à modulation de fréquence RFM, un récepteur RDS référencé RRDS, un décodeur de données RDS référencé DRDS, ces éléments étant intégrés dans un récepteur miniature (ou "pager") PAG intégré dans le boîtier.

Les signaux de données RDS (référencés D) et d'horloge RDS (référence H) sont introduits dans un microprocesseur MP qui présente la mémoire MEM précitée pour mémoriser les grilles de programmes reçues par le récepteur PAG et la sélection à enregistrer, et qui est interconnectée avec le microprocesseur MP par un bus BUS1.

Le terminal présente également un écran de visualisation 10 relié au microprocesseur MP par un bus BUS2, un ou plusieurs voyants 11, un clavier CL2 présentant des touches appropriées pour la programmation des fonctions du terminal, et un émetteur infra-rouge EIR permettant de télécommander un enregistreur ENR pourvu d'un récepteur infra-rouge RIR.

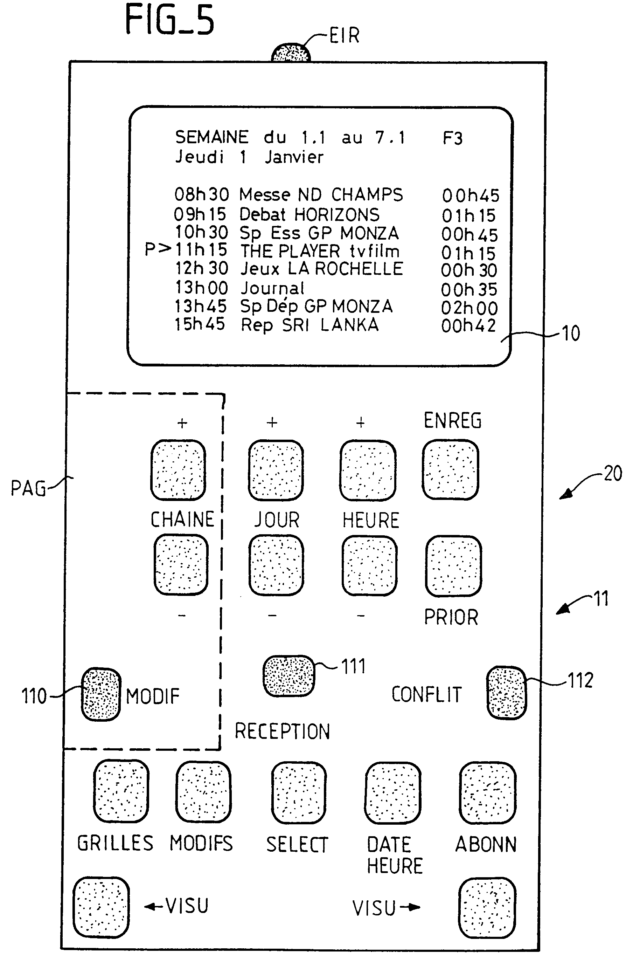

Selon les figures 5 à 7, un boîtier de télécommande conforme à la figure 4, présente des touches de sélection commandant l'affichage sur l'écran 10, à savoir pour incrémenter selon le numéro de la chaîne, le jour, l'heure, et pour commander l'enregistrement d'un programme pré-sélectionné par un pointeur P.

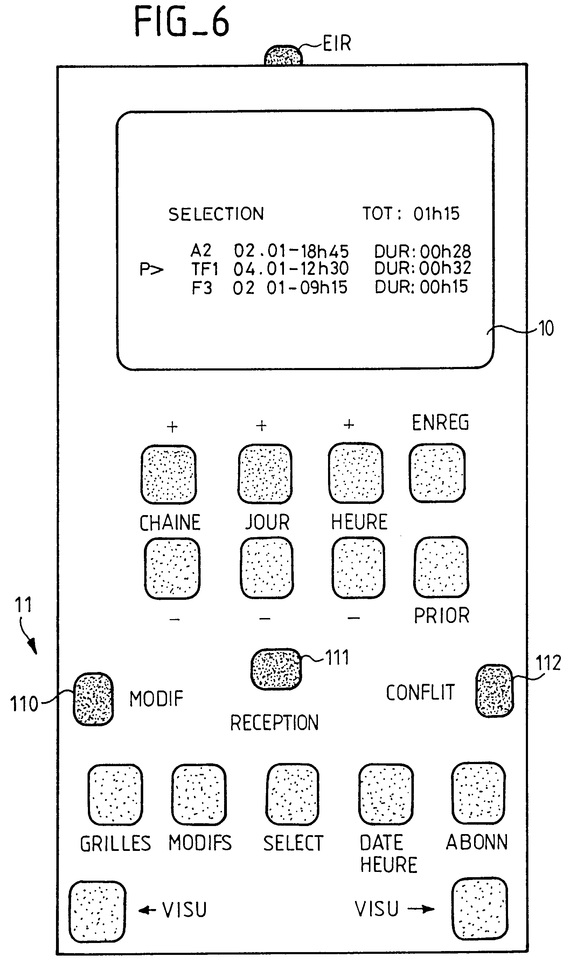

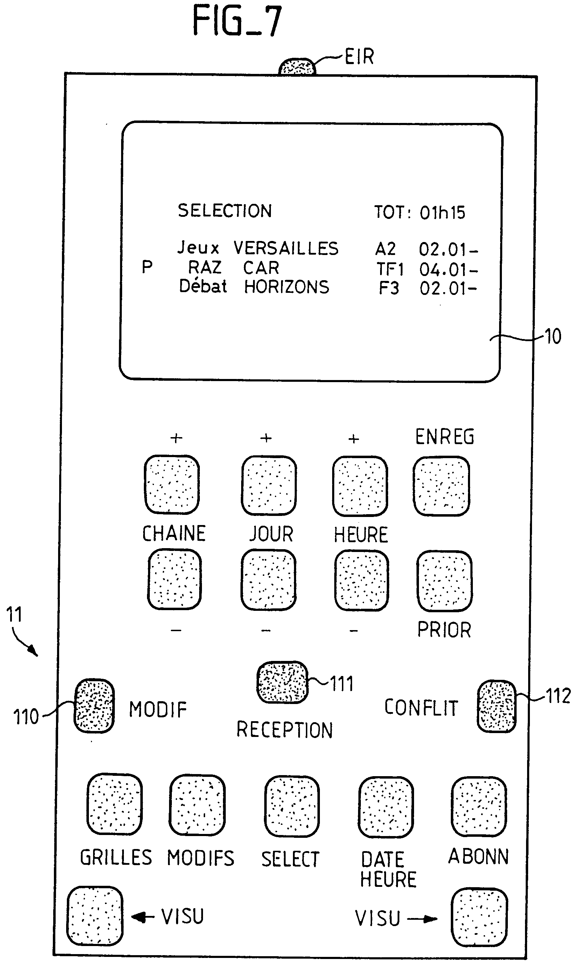

Il est possible de visualiser les programmes sélectionnés, par exemple comme représenté aux figures 6 et 7.

La mise en oeuvre d'un récepteur miniature dans une télécommande peut s'effectuer avec un serveur émis selon un standard autre que le standard RDS.

Le procédé décrit permet :

- de simplifier la programmation des enregistrements de programmes de télévision sur magnétoscope domestique, de manière entièrement autonome (pas de numéro codé de programme, de code-barre optique, etc),
- et/ou d'optimaliser la programmation d'un maximum d'enregistrements sur un même support,
- et/Ou de déclencher ces enregistrements eu moment réel de leur diffusion, quelle que soit la dérive horaire des programmes, ce déclenchement ne visant pas à éliminer les plages de publicité (à moins d'autorisation éventuelle, à accès conditionnel ou pas).

Bine que non mentionné explicitement dans la description, ce procédé peut être étendu à tout autre famille de programmes (radio, données) et tout usage autre que domestique (enregistrement de parties de programme pour usage professionnel, télédéclenchement pour décrochages locaux dans le cas de réseaux, etc).

**Revendications**

1 - Système de programmation d'enregistrements effectués par un enregistreur pour enregistrer au moins une émission d'au moins un canal d'émission caractérisé en ce qu'il comporte :

- un serveur diffusant d'une part une base de données prévisionnelle comportant au moins des informations prévisionnelles de début d'éléments de programme faisant partie d'une grille de programmes d'au moins un dit canal d'émission ainsi que des informations d'identification desdits éléments de programme et d'autre part un service en temps réel comportant au moins des signaux de début effectif desdits éléments de programme, ledit serveur n'étant pas émis par un dit canal d'émission
- un terminal (20) comportant un récepteur (PAG) recevant les informations de la base de donnée prévisionnelle et du service en temps réel, un dispositif de mémorisation (MEM) mémorisant les informations de la base de donnée prévisionnelle, une interface de sélection (CL2) permettant à un utilisateur de sélectionner l'enregistrement d'au moins un dit élément de programme de son choix et un circuit (EIR) de déclenchement de l'enregistreur (ENR) détectant le signal de début effectif dudit élément de programme sélectionné et déclenchant en conséquence un début d'enregistrement pour l'enregistreur (ENR) dudit élément de programme sélectionné.

2 - Système selon la revendication 1 caractérisé en ce que ladite base de données prévisionnelle comporte également des informations prévisionnelles de fin desdits éléments de programme et en ce que ledit service comporte également des signaux de fin effective desdits éléments de programme.

3 - Système selon une des revendications 1 ou 2, caractérisé en ce que ledit service comporte également des signaux respectivement d'interruption (U) et de reprise (R) affectés auxdits éléments de programme et en ce que le circuit de déclenchement de l'enregistreur comporte un moyen d'interruption et de reprise de l'enregistrement du programme sélectionné actionné par lesdits signaux d'interruption (U) et de reprise (R) affectés audit programme sélectionné.

4 - Système selon une des revendications 1 à 3 caractérisé en ce que le terminal est un boîtier de télécommande (20) de l'enregistreur et en ce que le circuit de déclenchement de l'enregistreur comporte un émetteur infra-rouge de télécommande.

5 - Système selon une des revendications 1 à 3 caractérisé en ce qu'il comporte un émetteur RDS (EM) effectuant la diffusion dudit serveur, en ce que le terminal est un boîtier (20) de télécommande de l'enregistreur (ENR) et comporte un récepteur RDS (PAG) et en ce que le circuit de déclenchement de l'enregistreur comporte un émetteur infra-rouge de télécommande (EIR).

6 - Système selon une des revendications précédentes caractérisé en ce que la base de donnée dudit serveur comporte au moins une grille de programme hebdomadaire affectée à la semaine S en cours.

7 - Système selon la revendication 6 caractérisé en ce que la base de donnée dudit serveur comporte également une grille de programme hebdomadaire affectée à la semaine (S + 1) suivant la semaine en cours.

8 - Système selon une des revendications précédentes caractérisé en ce que chacun desdits signaux de début effectif desdits éléments de programme comporte un bloc comprenant un identifiant de l'élément de programme et un signal logique (L) de début d'enregistrement.

9 - Système selon la revendication 2 caractérisé en ce que chacun desdits signaux de fin effective desdits éléments de programme comporte un bloc comprenant un identifiant de l'élément de programme et un signal logique de fin (F) d'enregistrement.

10 - Système selon la revendication 3 caractérisé en ce que chacun desdits signaux d'interruption (U) et de reprise (R) comporte un bloc comprenant un identifiant de l'élément de programme objet de l'interruption et respectivement un signal logique d'interruption (U) et de reprise (R).

11 - Système selon une des revendications précédentes caractérisé en ce que le serveur comporte un moyen de cryptage des signaux de début effectif contenus dans le service en temps réel, et en ce que le terminal (20) comporte un moyen de décryptage desdits signaux de début effectif.

12 - Procédé de programmation d'enregistrements effectués par un enregistreur caractérisé en ce qu'il comporte les étapes suivantes :
- émettre un serveur diffusant d'une part une base de données prévisionnelle comportant au moins des informations prévisionnelles de début d'élément de programme faisant partie d'une grille de programmes d'au moins un canal d'émission ainsi que des informations d'identification desdits éléments de programme et d'autre part un service en temps réel comportant au moins des signaux de début effectif desdits éléments de programme, ledit serveur n'étant pas émis par un dit canal d'émission
- recevoir à l'aide d'un récepteur (PAG) les informations de la base de données prévisionnelle et du service en temps réel
- mémoriser les informations de la base de données prévisionnelles
- sélectionner l'enregistrement d'au moins un dit élément de programme
- détecter le signal de début effectif dudit élément de programme sélectionné

- à réception dudit signal de début effectif déclencher le début d'enregistrement par l'enregistreur (ENR) dudit élément de programme sélectionné

13 - Procédé selon la revendication 11 caractérisé en ce que l'émission de la base de données prévisionnelle et du service en temps réel sont effectués selon la norme RDS.

14 - Procédé selon une des revendications 12 ou 13 caractérisé en ce qu'il comporte à l'émission une étape de cryptage au moins dudit signal de début effectif, et à la réception une étape de décryptage au moins dudit signal de début effectif.

15 - Terminal de programmation d'enregistrements effectués par un enregistreur pour enregistrer au moins une émission d'au moins un dit canal d'émission, caractérisé en ce qu'il comporte :
- un récepteur (PAG) accordé en dehors d'un dit canal d'émission et recevant d'une part les informations d'une base de données prévisionnelle comportant au moins des informations prévisionnelles de début d'éléments de programme faisant partie d'une grille de programmes d'au moins un canal d'émission ainsi que des informations d'identification desdits éléments de programme, et d'autre part un service en temps réel comportant au moins des signaux de début effectif desdits éléments de programme
- un dispositif de mémorisation (MEM) mémorisant les informations de la base de données prévisionnelle
- une interface de sélection (CL2) permettant à un utilisateur de sélectionner l'enregistrement d'au moins un dit élément de programme
- un circuit de déclenchement (EIR) détectant le signal de début effectif dudit élément de programme sélectionné et produisant en conséquence un signal de départ d'enregistrement dudit élément de programme sélectionné

16 - Terminal selon la revendication 15 caractérisé en ce que le récepteur est un récepteur RDS.

17 - Terminal selon une des revendications 15 ou 16 caractérisé en ce qu'il est un boîtier (20) de télécommande de l'enregistreur (ENR) et en ce que le circuit de déclenchement de l'enregistreur comporte un émetteur infra-rouge de télécommande (EIR) produisant ledit signal de départ d'enregistrement.

18 - Terminal selon une des revendications 15 à 17, caractérisé en ce qu'il comporte un écran (10) de visualisation des informations d'identification des élément de programme et un pointeur (P) de sélection des éléments de programme à enregistrer.

19 - Terminal selon une des revendications 15 à 18 caractérisé en ce qu'il comporte un moyen de décryptage desdits signaux de début effectif.

20 - Terminal selon la revendication 19, caractérisé en ce qu'il comporte un moyen de contrôle de la validité d'un abonnement au service en temps réel et un moyen de validation du moyen de décryptage en fonction du résultat dudit contrôle de validité.

1.1 Saisie Grilles Semaine S+1

PHASE 1 : TELECHARGEMENT
PHASE 2 : MODIFICATIONS

PHASE 4 : DECLENCHEMENT

1.2 Stockage provisoire grilles Semaine S+1

1.3 Validation + sauvegarde grilles Semaine S+1

2.1 Modifications (éventuelles) grilles SEM S et S+1

4.1 Suivi des programmes et pointage des identifiants

1.5 Semaine S+2

1.4 Diffusion quotidienne grilles Semaine S+1

2.2 Diffusion modifications

5.1 Cryptage des identifiants

4.2 Diffusion des blocs de déclenchement

## FIG_1

EMETTEUR
TERMINAL

5.3 *Contrôle validité carte abonnement et signalisation

1.6 Réception grilles semaine S+1 effacement grilles semaine S-1

2.3 Réception modifications

4.3 Réception des blocs de déclenchement

Réception date/heure

Signalisation perte réception

1.7 Stockage semaines S et S+1

2.4 Signalisation modification(s) de grille(s)

PHASE 3 : PROGRAMMATION
* * * * * * * * * * * *

3.0 Configuration initiale de la réception

5.2 * Décryptage des identifiants si abonn = OK

3.1 Visualisation (choix)
* grilles (à jour)
* modifs (seules)
* sélection
* durée valid. abonnement
* date/heure

3.5 Signalisation conflit de sélection

3.2 Sélection des enregistrements

3.4 Stockage des identifiants de la sélection

4.4 Comparaison des identifiants

4.5 Commande du magnétoscope

3.3 Optimalisation automatique de la sélection

4.6 Effacement identifiants titres enregistrés

10

# FIG_2

EM

CRDS

DIFFUSION
DES GRILLES

LECTURE
DES GRILLES

SAISIE DES GRILLES

ORD

CL1

FIG_3

FIG_4

EP 0 668 698 A1

FIG_5

# FIG_6

EIR

SELECTION                    TOT : 01h15

    A2   02.01-18h45   DUR: 00h28
P>  TF1  04.01-12h30   DUR: 00h32
    F3   02 01-09h15   DUR: 00h15

10

+      +      +    ENREG

CHAINE   JOUR   HEURE

PRIOR

−     −     −

11

111

110  MODIF           CONFLIT  112

RECEPTION

GRILLES  MODIFS  SELECT  DATE  ABONN
                       HEURE

←VISU         VISU→

# FIG_7

SELECTION         TOT: 01h15

| | | | |
|---|---|---|---|
| | Jeux | VERSAILLES | A2 02.01– |
| P | RAZ | CAR | TF1 04.01– |
| | Débat | HORIZONS | F3 02.01– |

10

+      +      +     ENREG

CHAINE    JOUR    HEURE

–      –      –     PRIOR

11

110    MODIF     111    CONFLIT    112

RECEPTION

GRILLES   MODIFS   SELECT   DATE HEURE   ABONN

← VISU        VISU →

EIR

EP 0 668 698 A1

**Office européen des brevets**

**RAPPORT DE RECHERCHE EUROPEENNE**

Numero de la demande

EP 95 40 0315

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | DE-A-41 13 918 (DEUTSCHE THOMSON-BRANDT GMBH) | 1,2,12, 13,15,16 | H04N7/08 |
| Y | * colonne 1, ligne 32 - colonne 2, ligne 41 * | 3,6, 8-11,19, 20 | |
| | * colonne 2, ligne 47 - colonne 3, ligne 33; revendication 1; figures 1,2 * | | |
| | --- | | |
| Y | WO-A-89 11199 (VOGEL) * page 6 - page 8, ligne 6; figure 1 * * page 10, ligne 18 - page 11, ligne 14 * | 3,5,17 | |
| | --- | | |
| Y | US-A-5 274 454 (HIGGINS) * colonne 1, ligne 56 - colonne 2, ligne 6 * | 5,17 | |
| | * colonne 2, ligne 14 - colonne 3, ligne 50; figure 1 * | | |
| | --- | | |
| D,Y | EP-A-0 300 562 (PHILIPS ELECTRONIC AND ASSOCIATED INDUSTRIES LIMITED) * page 4, ligne 2 - page 5, ligne 57; figure 2 * | 6,8-10 | |
| | | | **DOMAINES TECHNIQUES RECHERCHES (Int.Cl.6)** |
| | --- | | H04N |
| Y | GB-A-2 232 025 (BSB DATAVISION LIMITED) * page 6, ligne 13 - ligne 23; figure 1 * | 11,19,20 | H04H G04G |
| A | * page 7, ligne 17 - page 16, ligne 8 * | 1-20 | |
| | ----- | | |

Le présent rapport a été établi pour toutes les revendications

| Lieu de la recherche | Date d'achèvement de la recherche | Examinateur |
|---|---|---|
| BERLIN | 1 Juin 1995 | Materne, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

17